# EUROPEAN PATENT SPECIFICATION

(11) **EP 1 684 372 B1**
(45) Date of publication and mention of the grant of the patent: **01.02.2012**
(21) Application number: 04793292.6
(22) Date of filing: 25.10.2004
(51) Int. Cl.: H01M 8/04, H01M 8/00, H01M 8/02, B60L 11/10

(54) **FUEL CELL SYSTEM AND MOBILE BODY**
BRENNSTOFFZELLENSYSTEM UND MOBILER KÖRPER
SYSTEME DE PILE A COMBUSTIBLE ET CORPS MOBILE

(30) Priority: 04.11.2003 JP 2003374768
(43) Date of publication of application: 26.07.2006
(73) Proprietor: Toyota Jidosha Kabushiki Kaisha, Toyota-shi, Aichi 471-8571 (JP)
(72) Inventor: AOYAMA, Satoshi, Toyota Jidosha Kabushiki Kaisha, Toyota-shi, Aichi 471-8571 (JP); MASUI, Takatoshi, Toyota Jidosha Kabushiki Kaisha, Toyota-shi, Aichi 471-8571 (JP); IGUCHI, Satoshi, Toyota Jidosha Kabushiki Kaisha, Toyota-shi Aichi, Aichi 471-8571 (JP); OGINO, Shigeru, Toyota Jidosha Kabushiki Kaisha, Toyota-shi, Aichi 471-8571 (JP); KIMURA, Kenji, Toyota Jidosha Kabushiki Kaisha, Toyota-shi, Aichi 471-8571 (JP); SATO, Hiromichi, Toyota Jidosha Kabushiki Kaisha, Toyota-shi, Aichi 471-8571 (JP); IIJIMA, Masahiko, Toyota Jidosha Kabushiki Kaisha, Toyota-shi, Aichi 471-8571 (JP); ITO, Naoki, Toyota Jidosha Kabushiki Kaisha, Toyota-shi, Aichi 471-8571 (JP); IZAWA, Yasuhiro, Toyota Jidosha Kabushiki Kaisha, Toyota-shi, Aichi 471-8571 (JP)
(74) Representative: TBK
(86) International application number: PCT/JP2004/016191
(87) International publication number: WO 2005/043663

(56) References cited:
- JP-A- 4 004 570
- JP-A- 4 345 762
- JP-A- 5 299 105
- JP-A- 2002 012 407
- JP-A- 2003 077 513
- JP-A- 2003 257 450
- JP-A- 2003 275 553
- JP-A- 2004 129 433
- JP-A- 2004 146 337
- JP-A- 2004 327 350

## Description

### TECHNICAL FIELD

This invention relates to a fuel cell system and to a method for control thereof.

### BACKGROUND ART

Various types of fuel cells have been proposed to date. For example, Patent Citation 1 teaches a fuel cell wherein a palladium series metal film is disposed on the anode side of an electrolyte layer having proton conductivity. According to this Patent Citation 1, by joining a hydrogen permeable metal film to the electrolyte membrane, it becomes possible for a reformed gas that has not been refined to a high degree of purity, to be supplied directly to the anode as the fuel gas. As another arrangement wherein the electrolyte layer is joined with a palladium series metal or other hydrogen-permeable metal film, an arrangement employing a proton conductive solid electrolyte as the electrolyte would be possible as well.

### DISCLOSURE OF THE INVENTION

However, palladium series metals and other such hydrogen permeable metals have the characteristic of being susceptible to hydrogen permeable, particular at low temperature. Consequently, in a fuel cell furnished with a layer of hydrogen-permeable metal, there is a possibility that during a drop in temperature of the fuel cell occurring, for example, when the fuel cell is stop, the hydrogen-permeable metal layer will give rise to hydrogen permeable, so that the durability of the fuel cell suffers.

In order to address the past problem mentioned above, it is an object of the present invention to provide a fuel cell furnished with a hydrogen-permeable metal layer, wherein hydrogen permeable of the hydrogen-permeable metal layer is prevented.

This object is achieved by a power supply system according to claim 1. Furthermore, a mobile object according to claim 12, 13, 14 or 15, and a method of stop a fuel cell are provided.

Advantageous further developments are as set forth in the respective dependent claims.

According to a first aspect there is provided a power supply system for outputting power. The power supply system pertaining to the first aspect comprises a fuel cell furnished with a proton-conductive electrolyte layer and a hydrogen-permeable metal layer joined to the electrolyte layer; a fuel gas feeder for feeding a hydrogen-containing fuel gas to the anode side of the fuel cell; a purge gas feeder for feeding a purge gas devoid of hydrogen to the anode side of the fuel cell; and a purge controller that, once power generation in the fuel cell stops, actuates the purge gas feeder to replace the fuel gas within the fuel cell with the purge gas.

According to this power supply system, once power generation in the fuel cell stops, fuel gas remaining within the fuel cell is replaced with a purge gas, so that even if the internal temperature of the fuel cell drops once power generation stops, the hydrogen-permeable metal layer furnished to the fuel cell will not give rise to hydrogen permeable.

The power supply system pertaining to the first aspect may further comprise a purge decision unit that, once power generation in the fuel cell stops, decides whether a purge condition under which the purge gas should be supplied to the anode side of the fuel cell is met; and a purge controller that, in the event that the purge decision unit decides that the purge condition is met, actuates the purge gas feeder to replace the fuel gas within the fuel cell with the purge gas, or in the event that the purge decision unit decides that the purge condition is not met, does not actuate the purge gas feeder.

By means of this arrangement, a decision is made as to whether a purge condition dictating that purge gas should be supplied is met, and in the event of a decision that the purge condition is met, the fuel gas within the fuel cell is replaced with the purge gas, or in the event of a decision that the purge condition is not met, the purge gas feeder is not actuated, whereby purge gas feed control can be carried out with a minimum of energy loss, depending on the operational status of the fuel cell.

In the power supply system pertaining to the first aspect the decision by the purge decision unit as to whether the purge condition is met may be executed on the basis of prescribed information representing the operational status of the power supply system and/or prescribed information reflecting change in the power required by the power supply system.

By means of this arrangement, since the decision as to whether the purge condition for supplying purge gas is met is made on the basis of prescribed information representing the operational status of the power supply system or prescribed information reflecting change in the power required by the power supply system, under conditions in which the power generation stoppage is anticipated to be relatively brief, power generation may be stop without supplying the purge gas. Thus, if power generation is resumed (restarted) within a brief time subsequent to being stop, a condition in which fuel gas is kept within the fuel cell is maintained, so that it is possible to obtain the desired level of power immediately upon restart. Consequently, the time required for restart may be reduced and energy loss during restart may be held to a minimum. Additionally, under conditions in which the power generation stoppage is anticipated to be relatively prolonged, the fuel gas within the fuel cell is replaced with the purge gas, so that even if the internal temperature of the fuel cell drops once power generation stops, the hydrogen-permeable metal layer furnished to the fuel cell will not give rise to hydrogen permeable.

In the power supply system pertaining to the first aspect the purge controller may actuate the purge gas feeder once a prescribed time period has elapsed after power generation by the fuel cell has stop. By means of this arrangement, the purge gas feeder may be actuated appropriately, without the need to make a decision in association with a complicated process. At this time, since no purge gas will have been supplied in the event that the fuel cell is restarted before the prescribed time period has elapsed, the restart time may be reduced and energy loss may be held to a minimum.

The power supply system pertaining to the first aspect may further comprise a fuel gas pressurizing unit that, once power generation by the fuel cell has stop but the purge gas supply portion is not actuated, raises the pressure of the fuel gas in the fuel gas flow passage formed in the fuel cell.

By means of this arrangement, more fuel gas may be stored in the fuel cell in the event that power generation by the fuel cell stops without the purge gas feeder being actuated. Accordingly, during restarting of the fuel cell, power generation may be resumed immediately with a sufficient level of fuel gas, making it possible to obtain the desired level of power immediately after startup.

At this time, the fuel gas pressurizing unit may raise the pressure of the fuel gas by actuating the fuel gas feeder to supply the fuel gas, while blocking the outlet of the fuel gas flow passage. By means of this arrangement, the pressure of the fuel gas within the fuel cell may be raised by means of a simple construction.

The power supply system pertaining to the first aspect may further comprise a temperature sensing unit for sensing temperature at a prescribed location that is part of the power supply system and that operates at a temperature which rises to a prescribed high temperature during power generation by the fuel cell, wherein the purge decision unit decides that the purge condition is met as long as the temperature sensed by the temperature sensing unit does not go above a prescribed value.

By means of this arrangement, in the event that the temperature sensed by the temperature sensing unit goes above a predetermined value, fuel gas will be held within the fuel cell. Consequently, it is possible to prevent a situation where power generation may not be resumed quickly during restart due to the fuel cell having been supplied with fuel gas, despite that fact that a prescribed location outside the fuel cell is being maintained in a condition enabling immediate power generation.

In the power supply system pertaining to the first aspect, when power generation by the fuel cell commences after the purge gas feeder has been actuated, the fuel gas feeder may supply the fuel cell with fuel gas at a level in excess of the level corresponding to the power to be generated by the fuel cell. In this case it becomes possible to accelerate the operation of scavenging purge gas from the fuel cell during restart, so that the desired level of power is obtained faster.

In the power supply system pertaining to the first aspect, the fuel gas feeder, when the power to be generated by the fuel cell is equal to or less than a prescribed value, may supply the fuel gas at a level in excess of the level corresponding to the power to be generated; or when the power to be generated is greater than the prescribed value, may supply the fuel gas at a level corresponding to the power to be generated. By means of this arrangement, when fuel gas is being supplied at a level sufficient to scavenge the purge gas, it is possible to prevent unnecessary consumption of fuel gas and energy due to an excessively high level of feed fuel gas.

The power supply system pertaining to the first aspect may further comprise a secondary cell. In this case, power may continue to be output from the power supply device, even after power generation by the fuel cell has stop.

The power supply system pertaining to the first aspect may further comprise a state of charge sensing unit for sensing the state of charge of the secondary cell, wherein in the event that the state of charge is equal to or less than a prescribed value, charging of the secondary cell is carried out using the fuel cell, with priority over the operation of shutting off power generation by the fuel cell. By means of this arrangement, power generation by the fuel cell is stop after first ensuring the state of charge of the secondary cell, so that the required power may be obtained from the secondary cell during restart of the fuel cell.

The power supply system pertaining to the first aspect may further comprise a secondary cell; and an output request acquiring unit for acquiring an output request to the power supply system, wherein when the output request acquired by the output request acquiring unit is equal to or less than a prescribed value, the purge decision unit decides that the purge condition is not met, and outputs power from the secondary cell.

By means of this arrangement, in instances where output requirements are small and efficiency would be low if power were generated using the fuel cell, the efficiency of the system overall may be improved by shutting off power generation by the fuel cell, and using the secondary cell instead.

A first mobile object according to a second aspect comprises the power supply system pertaining to the first aspect installed on board as a drive energy supply.

Since a mobile object may experience frequent stopping and restarting of its fuel cell, by installing the above described power supply system on board, it is possible to effectively prevent hydrogen permeable of the hydrogen-permeable metal layer during stop of the fuel cell.

A second mobile object according to a third aspect comprises the power supply system pertaining to the first aspect installed on board as a drive energy supply, and a predetermined start switch enabling driving of the mobile object, wherein the purge controller actuates the purge gas feeder once a prescribed time period has elapsed after the start switch has turned off and power generation by the fuel cell has stop.

By means of this arrangement, supply of the purge gas may be carried out on the basis of a more accurate decision regarding whether the fuel cell will be stop for a relatively extended period. Additionally, once power generation by the fuel cell has been shut down, if the fuel cell should be subsequently restarted within a short time, the inconvenience posed by supply of purge gas may be avoided.

A third mobile object according to a fourth aspect comprises the power supply system pertaining to the first aspect installed on board as a drive energy supply, and a predetermined start switch enabling driving of the mobile object, wherein when the start switch has turned off, the purge decision unit decides that the purge condition is met.

In this case, by means of a simple arrangement it is possible to decide, with a high degree of accuracy, whether stop of the fuel cell will be for an extended period of time. Consequently, the inconvenience posed by supply of purge gas when the fuel cell is stop may be avoided.

A fourth mobile object according to a fifth aspect comprises the power supply system pertaining to the first aspect installed on board as the drive energy supply, and an actuation status acquiring unit that acquires the actuation status of a actuating unit for driving the mobile object, wherein after the purge gas feeder has been actuated during stop of the fuel cell, when the actuation status acquiring unit has acquired the actuation status, the purge controller halts the purge gas feeder.

By means of this arrangement, supply of fuel gas may be initiated quickly in the event that the operator wishes to drive the mobile object after the fuel cell has shut down. According, the desired level of power may be obtained quickly from the fuel cell.

In the fourth mobile object, the power supply system may further comprise a temperature sensing unit for sensing the temperature of the fuel cell, and a secondary cell serving as another drive energy supply for the mobile object, wherein when the fuel cell temperature sensed by the temperature sensing unit is equal to or less than a prescribed value, the purge controller continues to actuate the purge gas feeder, even in the event that the actuation status acquiring unit has acquired the actuation status after the purge gas feeder has been actuated during stop of the fuel cell.

According to this arrangement, the mobile object may be driven by the secondary cell, and at times when the fuel cell is at low temperature and generation efficiency is low, the fuel cell will not be used to generate power, thus preventing a drop in efficiency of the power supply system.

The invention may be reduced to practice in various other forms, for example a stop method for a power supply system, a mobile object, a fuel cell system, or the like.

### BRIEF DESCRIPTION OF THE DRAWINGS

FIG. 1 is an illustrating depicting a simplified arrangement of an electric vehicle;
FIG. 2 is a block diagram representing a simplified arrangement of the fuel cell system;
FIG. 3 is a typical sectional view depicting the structure of a unit cell;
FIG. 4 is a flowchart representing the operating control process routine;
FIG. 5 is a flowchart representing the control decision process routine;
FIG. 6 is a flowchart representing the standby process routine;
FIG. 7 is a flowchart representing the stop process routine;
FIG. 8 is a flowchart representing the restart process routine; and
FIG. 9 is a typical sectional view depicting the structure of a unit cell.

### BEST MODE FOR CARRYING OUT THE INVENTION

The embodiments of the invention shall be described hereinbelow, making reference to the accompanying drawings.

### A. Overall Arrangement of the Device:

### A1. Arrangement of Electric Vehicle 10:

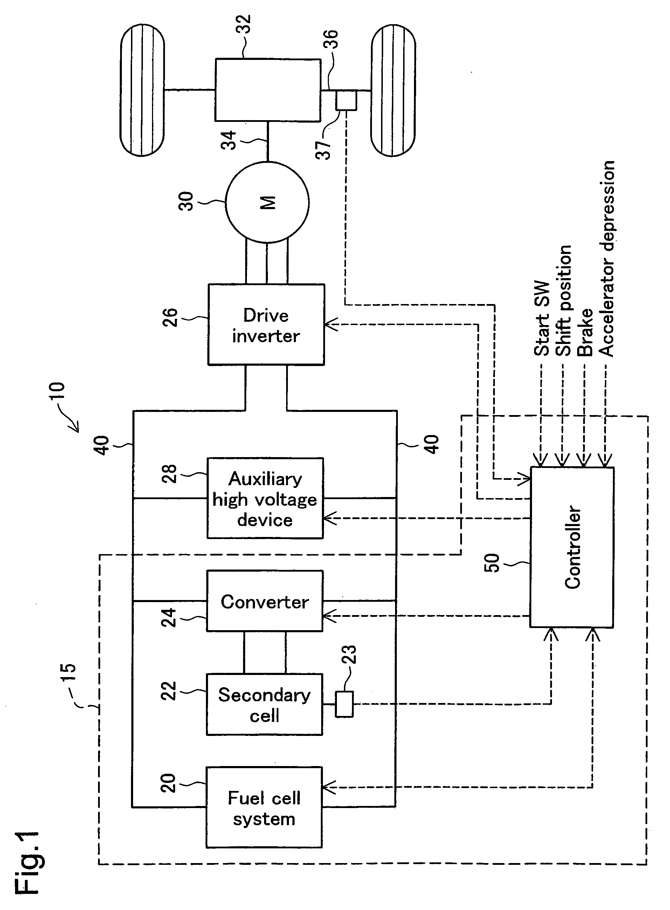

FIG. 1 is an illustrating depicting a simplified arrangement of an electric vehicle 10 having installed on board a fuel cell system 20 pertaining to Embodiment 1 of the invention. The electric vehicle 10 comprises a power supply system 15. As the load to which the power of the power supply system 15 is supplied, the electric vehicle 10 comprises a drive motor 30 connected to the power supply system 15 via a drive inverter 26, and an auxiliary high voltage device 28. Wiring 40 is furnished among the power supply system 15 and the loads, enabling power to be transmitted among the power supply system 15 and the loads.

The power supply system 15 comprises the fuel cell system 20 and a secondary cell 22. The fuel cell system 20 comprises a fuel cell 60 which is the main unit for power generation, as will be described later. The secondary cell 22 is connected via wiring 40 to a DC/DC converter 24; the DC/DC converter 24 and the fuel cell 60 are connected in parallel to the wiring 40.

At startup of the fuel cell system 20, the secondary cell 22 supplies electrical power for actuating the various parts of the fuel cell system 20, and continues to supply power to each load during the period until the fuel cell system 20 warm-up operation is complete. In the event that the level of power supplied by the fuel cell 60 is not sufficient, the secondary cell 22 also supplies power to make up for the deficit. As shown in FIG. 1, a state of charge (SOC) monitor 23 for detecting the state of charge of the secondary cell 22 is also furnished to the secondary cell 22. The state of charge monitor 23 can consist of a voltage sensor or SOC meter for integrating the secondary cell 22 charge/discharge current values and time.

The DC/DC converter 24, by establishing a target output value on the output side, regulates the voltage in the wiring 40, thereby regulating the output voltage of the fuel cell 60. As a result, a prescribed level of electrical power is output from the fuel cell 60 and secondary cell 22.

The drive motor 30, which is one of the loads receiving supply of power from the power supply system 15, is a synchronous motor furnished with a three-phase coil arrangement producing a rotating magnetic field. Power supplied from the power supply system 15 is converted to three-phase alternating current by the drive inverter 26, and supplied to the drive motor 30. The output shaft 34 of the drive motor 30 is connected to the drive axle 36 of the vehicle, via reduction gears 32. A vehicle speed sensor 37 is disposed on the drive axle 36.

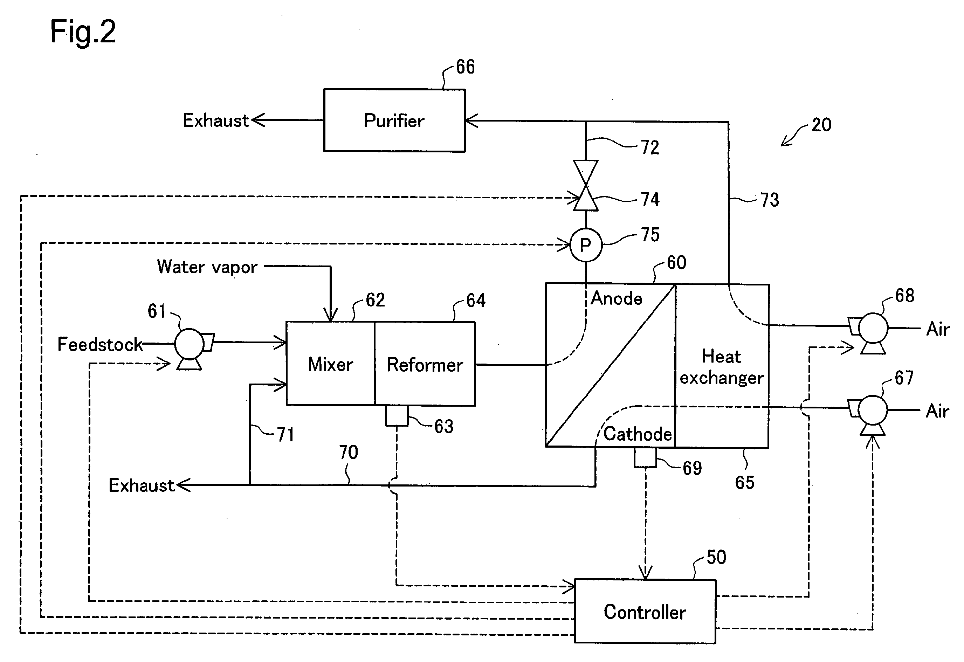

The auxiliary high voltage device 28 which is the other load is a device that utilizes electrical power supplied by the power supply system 15, in the form of unmodified voltage of 300 V or higher. Examples of auxiliary high voltage devices 28 are blowers 67, 68 for supplying air to the fuel cell 60, or a pump 61 for supplying a reformed feedstock (see FIG. 2). While these devices are contained in the fuel cell system 20, in FIG. 1, they are represented as the auxiliary high voltage device 28 situated outside the power supply system 15. Other high voltage devices 28 apart from those contained in the fuel cell system 20 include, for example, the air conditioning unit (A/C) of the electric vehicle 10.

The electric vehicle 10 further comprises a controller 50. The controller 50 is constituted as a microcomputer comprising a CPU, ROM, a RAM timer and so on. Input signals acquired by the controller 50 include a signal output by the state of charge monitor 23 mentioned earlier, and a signal output by the vehicle speed sensor 37. The controller 50 also inputs an on/off signal from the drive motor 30 start switch, as well as signals indicating shift position, foot brake on/off, accelerator depression level etc. in the electric vehicle 10. Upon acquiring these signals, the controller 50 executes various control processes, and outputs drive signals to the various components of the fuel cell system 20, the drive inverter 26, the high voltage devices 28, and so on.

### A2. Arrangement of Fuel Cell System 20:

FIG. 2 is a block diagram representing a simplified arrangement of the fuel cell system 20. The fuel cell system 20 of this embodiment is furnished with a solid oxide fuel cell as the fuel cell 60.

The fuel cell system 20 comprises a blower 67. The blower 67 supplies air as the oxidant gas to the cathode of the fuel cell 60. The fuel cell 60 is equipped with a heat exchanger 65 for passing on the heat of the fuel cell 60; the air supplied by the blower 67, after passing through the heat exchanger 65 to cool the fuel cell 60, is supplied to the cathode. The air that is discharged after having been supplied to the electrochemical reaction on the cathode (hereinafter termed cathode off-gas) is directed into a pipe 70 for discharge to the outside. Here, the fuel cell system 20 is provided with a pipe 71 that branches off from the pipe 70, and a portion of the cathode off-gas is further utilized in a reforming reaction, to be described later.

The fuel gas supplied to the anode of the fuel cell 60 is produced by reforming a predetermined feedstock. Examples of the feedstock subjected to the reforming reaction are hydrocarbons such as gasoline or natural gas, and various hydrocarbon compounds, such as methanol or other alcohols, aldehydes, and the like.

The feedstock for reforming is supplied to a mixer 62 by the pump 61. In the mixer 62 the reforming feedstock is mixed with air in the cathode off-gas, and with water vapor supplied separately. Where the reforming feedstock is a liquid, the reforming feedstock is subjected to vaporization in the mixer 62. The mixed vapor produced thereby is supplied to a reformer 64, where it is subjected to a reforming reaction to produce hydrogen-rich reformed gas. Specifically, in the reformer 64, as the water vapor reforming reaction proceeds, a partial oxidation reaction utilizing the oxygen in the cathode off-gas proceeds as well, and hydrogen is formed through these reactions. The reformer 64 is furnished with a reforming catalyst to accelerate the reforming reaction. Examples of reforming catalysts known in the art are copper-zinc base metal catalysts, and platinum or other noble metal catalysts; the catalyst may be selected appropriately depending on the reforming feedstock used. The reformer 64 is also furnished with a temperature sensor 63 for sensing the temperature of the reforming catalyst. The reformed gas produced thereby is supplied as fuel gas to the anode of the fuel cell 60.

The fuel gas supplied to the anode, after being utilized in generating electricity, is discharged as anode off-gas from a pipe 72. Since the anode off-gas contains harmful components such as residual hydrogen not used in generating electricity, before being vented to the outside, levels of harmful components are lowered by means of a purifier 66, to clean the anode off-gas. In this embodiment, the harmful components are eliminated through combustion in the purifier 66. The air used for this combustion is supplied by a blower 68 via a pipe 73. During this process, by disposing the pipe 73 so that it passes through the heat exchanger 65, the air for combustion can also be utilized to cool the fuel cell 60. The pipe 72 for guiding the anode off-gas is furnished with a valve 74 and a pressure sensor 75 for sensing anode off-gas pressure. The fuel cell 60 is equipped with a temperature sensor for sensing internal temperature.

Operation of the fuel cell system 20 is controlled by the controller 50 mentioned previously. The controller 50 inputs information relating to operating status of the various parts of the fuel cell system 20, such as the temperature sensors 63, 69 and the pressure sensor 75; the controller 50 also outputs drive signals to the pump 61, the blowers 67, 68, and other components.

### A3. Arrangement of Fuel Cell 60:

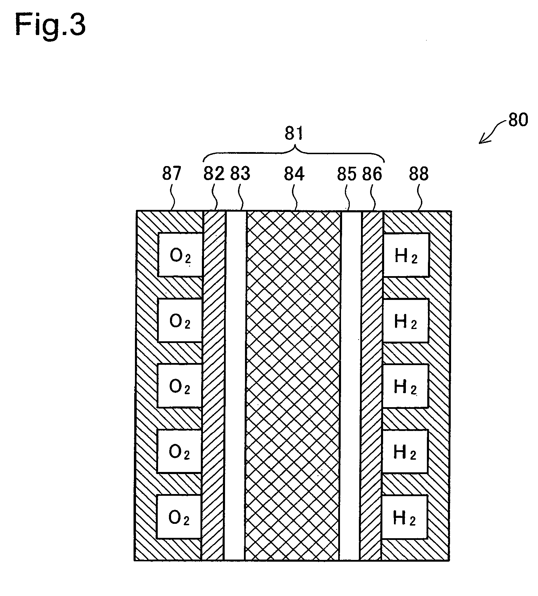

FIG. 3 is a typical sectional view depicting the structure of a unit cell 80 making up the fuel cell 60. The fuel cell 60 has a stack structure made up of stacked unit cells 80. The unit cell 80 structure has an electrolyte portion 81 sandwiched by gas separators 87, 88. Between the gas separator 87 and the electrolyte portion 81 are formed oxidant gas flow channels through which the oxidant gas passes. Between the gas separator 88 and the electrolyte portion 81 are formed fuel gas flow channels through which the fuel gas passes. The gas separators 87, 88 are gas impermeable members formed of carbon, metal or other electrically conductive material.

The electrolyte portion 81 has a five-layer structure composed of hydrogen-permeable metal, centered on a dense substrate 84 formed from vanadium (V). On either side of the substrate 84 are formed electrolyte layers 83, 85 composed of solid oxide. The electrolyte layers 83, 85 may employ a BaCeO₃ or SrCeO₃ based ceramic proton conductor or similar material. To the outside of the electrolyte layers 83, 85 are disposed thin films of palladium (Pd) 82, 86. In this embodiment, the Pd thin films 82, 86 are 0.1 µm in thickness, the electrolyte layers 83, 85 1 µm in thickness, and the substrate 84 40 µm in thickness, but the thickness of the layers may be established appropriately depending on factors such as the established operating temperature of the fuel cell. In the fuel cell 60 having this arrangement, electrolyte layers 83, 85 of sufficient thinness may be produced by growing the electrolyte layers 83, 85 on the dense substrate 84. It is possible thereby to reduce the film resistance of the solid oxide, allowing the fuel cell to be operated at a temperature on the order of 200 - 600 °C, which is lower than the operating temperature of solid electrolyte fuel cells to date.

To accelerate the reactions which proceed on the anode and the cathode, a catalyst layer of platinum (Pt) or the like may be provided within the unit cell if necessary. This catalyst layer can be disposed between the electrolyte portion 81 and the gas separators 87, 88. It could also be disposed between the thin film 82 and the electrolyte layer 83, the thin film 86 and the electrolyte layer 85, or the electrolyte layers 83, 85 and the substrate 84.

In FIG. 3, the fuel cell 60 is depicted by way of example as being furnished with an electrolyte portion 81 of five-layer structure, but various modifications to the fuel cell 60 are possible. For example, one or both of the thin films 82, 86 may be dispensed with. One of the electrolyte layers 83, 85 may be dispensed with as well. Where the thin films are omitted, catalyst layers may instead be furnished on the surfaces of the electrolyte portion on the gas flow channel side, with electrode members consisting of porous material disposed in contact further to the outside thereof, so as to be contact with the gas separators. In either case, it is possible to employ a structure having proton-conductive solid electrolyte layers deposited on a hydrogen-permeable dense metal film, to give a solid electrolyte fuel cell with a lower operating temperature than in the past.

### B. Control of Operation:

### B1. Overview of Operation Control Process:

In the power supply system 15 of this embodiment, switching of control pertaining to the operational status of the fuel cell system 20 is carried out on the basis of information representing operational status of the power supply system 15, and information reflecting change in the power level required by the power supply system 15. In this embodiment, a " standby process," a "stop process," a "restart process," and "normal processing" are provided as control processes relating to operational status of the fuel cell system 20.

The standby process is a control process carried out when power generation by the fuel cell 60 is to be halted temporarily. During execution of this standby process, the fuel cell 60 holds the fuel gas in its internal fuel gas flow channel, maintaining a condition in which power generation can be resumed immediately if needed. The operational status of the fuel cell system 20 during execution of the standby process shall hereinafter be termed Standby mode.

The stop process is a stop control process carried out when power generation by the fuel cell 60 is to be shut down for an extended period. By means of executing the stop process, the fuel gas is scavenged from the internal gas flow channel in the fuel cell 60. The operational status of the fuel cell system 20 during execution of the stop process shall hereinafter be termed Stop mode.

The restart process is a stop control process executed when power generation by the fuel cell 60 is to be resumed. That is, it is a process executed when the fuel cell system is to be restarted from Standby mode or Stop mode.

Normal processing is processing executed at times other than when the aforementioned standby process, stop process or restart process is executed; when normal processing is executed, power generation is carried out by the fuel cell 60. During execution of normal processing, for example, the electric vehicle 10 is driven by power supplied by the fuel cell 60, the electric vehicle 10 is driven by power supplied by both the fuel cell 60 and the secondary cell 22, or the secondary cell 22 is charged by the fuel cell 60.

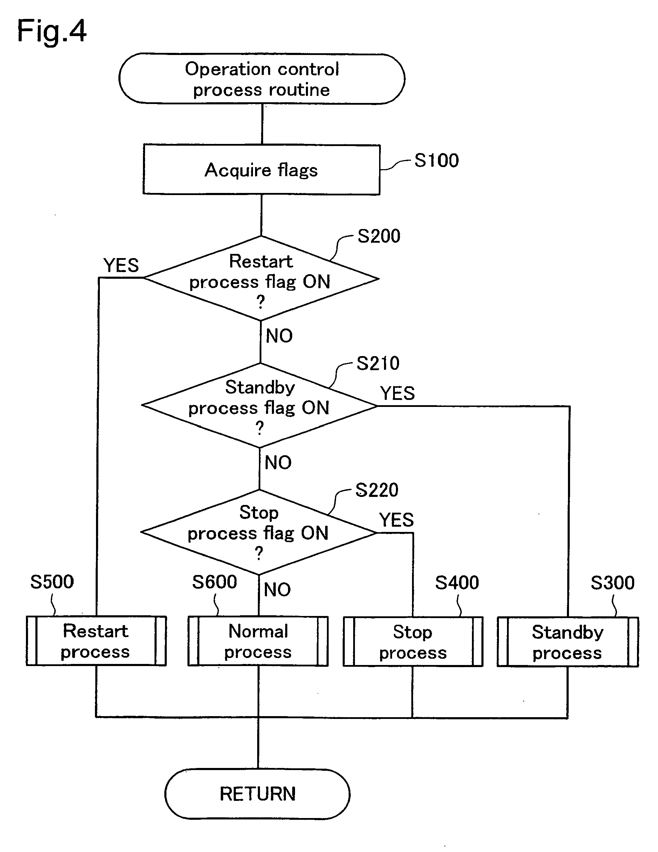

FIG. 4 is a flowchart representing the operating control process routine executed by the controller 50 of the power supply system 15. This routine starts up when the start switch of the drive motor 30 goes on. The routine is executed repeatedly in the controller 50 until three conditions are met, namely, the start switch is off, generation by the fuel cell 60 is stop, and the purge process is completed. When the routine starts up, the controller initially acquires a flag (Step S100). In the controller 50, in parallel with this routine, a control decision process routine to be described later is executed repeatedly, with a restart process flag, a standby process flag, and a stop process flag being set on or off by means of this control decision process routine. In Step S100, referring to the latest decision result of the control decision process routine, the flag set by the control decision process routine is acquired.

Next, the controller 50 decides whether the restart process flag is on (Step S200). If the restart process flag is on, the controller 50 executes the restart process (Step S300). If the restart process flag is off, the controller 50 decides whether the standby process flag is on (Step S210). If the standby process flag is on, the controller 50 executes the standby process (Step S600). If the standby process flag is off, the controller 50 decides whether the stop process flag is on (Step S220). If the stop process flag is on, the controller 50 executes the stop process (Step S500). If the stop process flag is off, the controller 50 executes normal processing (Step S400).

### B2. Control Decision Process:

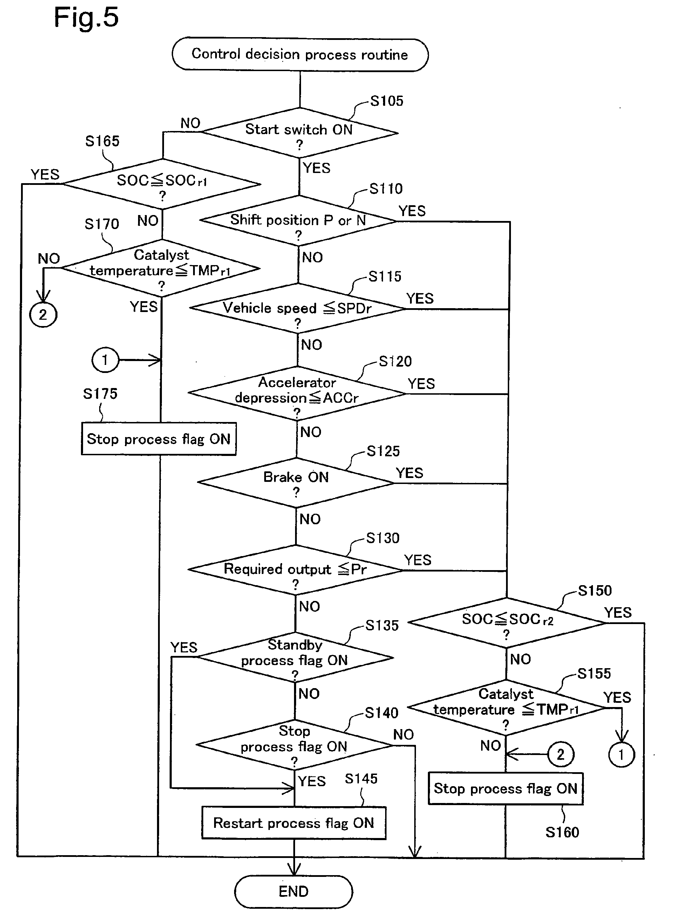

FIG. 5 is a flowchart representing the control decision process routine which refers to the results in Step S100 in FIG. 4. The routine acquires information representing the operational status of the power supply system 15 and information reflecting change in the power level required of the power supply system 15, and sets the flags on or off in the manner described previously. When the routine starts up, the controller 50 initially decides whether the start switch of the drive motor 30 is on (Step S105). If the start switch is on, it is highly likely that power is already being required, or that it will be required momentarily, in the power supply system 15.

In Step S105, in the event that the start switch is on, the controller 50 next decides whether the shift position is "P" or "N" (Step S110). If the shift position is other than "P" or "N," it is highly likely that power is already being required, or that it will be required momentarily, in the power supply system 15.

In Step S110, if the shift position is other than "P" or "N," the controller 50 next decides whether the vehicle speed is equal to or less than a predetermined reference value SPDr (Step S115). SPDr is pre-stored in memory in the controller 50, as a reference value for deciding whether the generating efficiency of the fuel cell 60 would suffer as a result of a drop in vehicle speed.

In Step S115, if the vehicle speed is determined to be greater than SPDr, the controller 50 decides whether the accelerator depression level is equal to or less than ACCr (Step S120). ACCr is a reference value pre-stored in memory in the controller 50, for deciding whether the generating efficiency of the fuel cell 60 would suffer as a result of less accelerator depression and lower required output.

In Step S120, if the accelerator depression level is determined to be greater than ACCr, the controller 50 decides whether the foot brake is on (Step S125). The fact that the foot brake is on would indicate that the required output is lower.

In Step S125, if the foot brake is off, the controller 50 decides whether the required output of the power supply system 15 is equal to or less than Pr. Ps is pre-stored in memory in the controller 50, as a reference value for deciding whether the generating efficiency of the fuel cell 60 would suffer as a result of a drop in required output.

In Step S130, if the required output is determined to be greater than Pr, the controller 50 decides that conditions are such that the power generation by the fuel cell 60 should take place. Accordingly, the controller 50 next decides whether the standby process flag is on (Step S135). If the standby process flag is on, the controller 50 then sets the restart process flag to on (Step S145) and terminates the routine. At this point, the stop process flag is off.

In Step S135, if the standby process flag is off, the controller 50 decides whether the stop process flag is on (Step S140). If the stop process flag is on, the controller 50 then sets the restart process flag to on (Step S145) and terminates the routine.

In Step S140, if the stop process flag is off, the controller 50 terminates the routine. At this point, the restart process flag is off.

In Steps S110 -S130, in the event that any condition is met, on the basis of information representing the operational status of the power supply system 15 and information representing change in the power level required of the power supply system 15, it is decided that conditions are such that the power generation by the fuel cell 60 should be stop. Accordingly, the controller 50 next decides whether the state of charge SOC of the secondary cell 22 is equal to or less than SOCᵣ₂ (Step S150). SOCᵣ₂ is pre-stored in memory in the controller 50, as a reference value for deciding that the power needed when restarting generation from Stop mode (the power needed to actuate the high voltage devices making up the fuel cell system 20 etc.) can be output by the secondary cell 22.

In Step S150, if the SOC of the secondary cell 22 is greater than SOCᵣ₂, even if the system goes into Standby mode, the power needed to subsequently restart generation will be obtainable from the secondary cell 22; thus, the controller 50 next decides whether the temperature of the reforming catalyst of the reformer 64 is equal to or less than TMPᵣ₁ (Step S155). TMPᵣ₁ is a reference value pre-stored in memory in the controller 50, for deciding whether the reforming catalyst exhibits sufficient activity to promote the reforming reaction.

In Step S155, if the temperature of the reforming catalyst is greater than TMPᵣ₁, the controller 50 sets the standby process flag to on (Step S160), and terminates the routine. At this point, the stop process flag and the restart process flag are off.

In Step S155, if the temperature of the reforming catalyst is equal to or less than TMPᵣ₁, the controller 50 sets the stop process flag to on (Step S175), and terminates the routine. At this point, the standby process flag and the restart process flag are off.

If in Step S150 the SOC of the secondary cell 22 is equal to or less than SOCᵣ₂, the controller 50 terminates the routine. At this point all of the flags are off. In the event that the SOC of the secondary cell 22 is equal to or less than SOCᵣ₂, the power needed to subsequently restart generation will not be obtainable from the secondary cell 22; accordingly, all of the flags are set to off in order to select normal processing whereby power generation by the fuel cell 60 takes place (FIG. 4), and subsequently the secondary cell 22 is charged by the fuel cell 60.

In Step S105, when the start switch is off, the controller 50 next decides whether the SOC of the secondary cell 22 is equal to or less than SOCᵣ₁ (Step S165). SOCᵣ₁ is pre-stored in memory in the controller 50, as a reference value for deciding that the power needed when restarting generation from Stop mode can be output by the secondary cell 22.

In Step S165, if the SOC of the secondary cell 22 is greater than SoCᵣ₁, even if the system goes into Stop mode, the power needed to subsequently restart generation will be obtainable from the secondary cell 22; thus, the controller 50 next decides whether the temperature of the reforming catalyst of the reformer 64 is equal to or less than TMPᵣ₁ (Step S170). This Step S170 is a process similar to Step S155 described previously.

In Step S170, if the temperature of the reforming catalyst is equal to or less than TMPᵣ₁, the controller 50 sets the stop process flag to on (Step S175), and terminates the routine. At this point, the standby process flag and the restart process flag are off.

In Step S170, if the temperature of the reforming catalyst is greater than TMPᵣ₁, the controller 50 sets the standby process flag to on (Step S160), and terminates the routine. At this point, the stop process flag and the restart process flag are off.

If in Step S165 the SOC of the secondary cell 22 is equal to or less than SoCᵣ₁, the controller 50 terminates the routine. At this point all of the flags are off. In the event that the SOC of the secondary cell 22 is equal to or less than SOCᵣ₁, the power needed to subsequently restart generation will not be obtainable from the secondary cell 22; accordingly, all of the flags are set to off in order to select normal processing whereby power generation by the fuel cell 60 takes place (FIG. 4), and subsequently the secondary cell 22 is charged by the fuel cell 60.

By means of the control decision process described above, the restart process flag, the standby process flag, and the stop process flag are set on and off.

### B3. Standby Process:

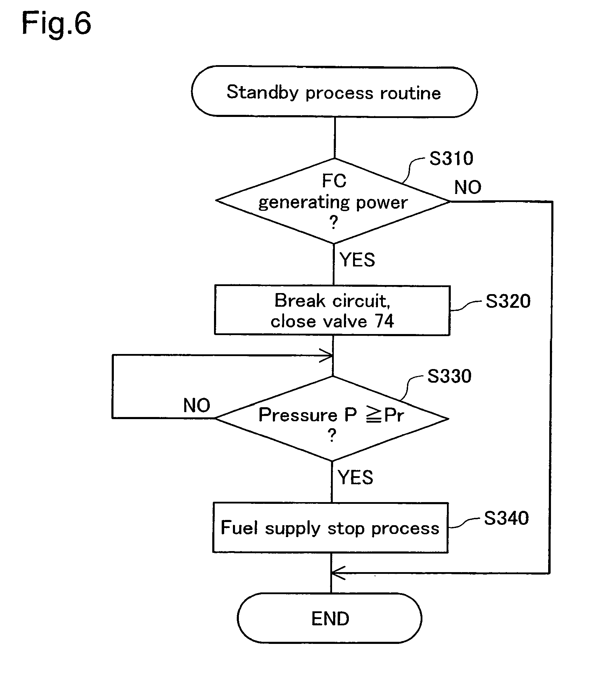

FIG. 6 is a flowchart representing the standby process routine executed in Step S300 of FIG. 4. This process is executed by the controller 50 in the event that the restart process flag is off and the standby process flag is on. When the routine is started up, the controller 50 decides whether the fuel cell 60 is currently generating power (Step S310). If the fuel cell 60 is currently generating power, the controller 50 stops power generation by the fuel cell 60, and executes control for the purpose of putting the operational status of the fuel cell system 20 into Standby mode. Specifically, the controller 50 first switches the fuel cell 60 to an open circuit, and shuts the valve 74 (Step S320). The power supply system 15 is furnished with a switch for connecting and disconnecting the wiring 40 and the fuel cell 60; in Step S320, this switch is turned off. At this time, fuel gas continues to be supplied to the fuel cell 60 from the reformer 64.

Next, the controller 50 acquires the pressure in the pipe 72 from the pressure sensor 75 (this is the same as the pressure P in the fuel gas flow passage within the fuel cell 60), and decides whether the pressure P is equal to or greater than Pr (Step S330). Pr is a value representing a state in which fuel gas is held within the fuel cell 60, so as to enable generation of power above a prescribed level immediately upon resuming power generation by the fuel cell 60 in the stop state, and is pre-stored in memory in the controller 50. In Step S320, since the valve 74 is closed while supply fuel gas, the aforementioned pressure P rises. The controller 50 repeatedly executes the process of Step S330 until it decides that pressure P is equal to or greater than Pr.

In Step S330 once it is decided that pressure P is equal to or greater than Pr, the controller 50 executes a process to halt the supply of fuel to the fuel cell 60 (Step S340), and terminates the routine. In Step S340, supply to the reformer 64 of reforming feedstock, water vapor, and air is halted, halting production of reformed gas by the reformer 64, thereby halting the supply of fuel gas to the fuel cell 60. By means of executing Step S340, the fuel gas flow passage within the fuel cell 60 is in state in which the fuel gas is held at conditions such the pressure of the fuel gas is equal to Pr. In order to maintain a state in which the fuel gas is held within the fuel cell 60, it is possible, for example, to furnish a valve on the flow passage connecting the reformer 64 with the fuel cell 60, and to close this valve in Step S340. Alternatively, valves could be furnished on the flow passages for supplying the mixer 62 with reforming feedstock, water vapor, and air, and these valves closed during the process. By executing Steps S320 -S340 to stop power generation while holding fuel gas within the fuel cell 60, the fuel cell system 20 is placed in Standby mode.

In Step S310, in the event it is decided that the fuel cell 60 is not currently generating power, since the fuel cell system 20 is already in Standby mode, the controller 50 terminates the routine. The fuel cell system 20 is maintained in Standby mode thereby.

### B4. Stop Process:

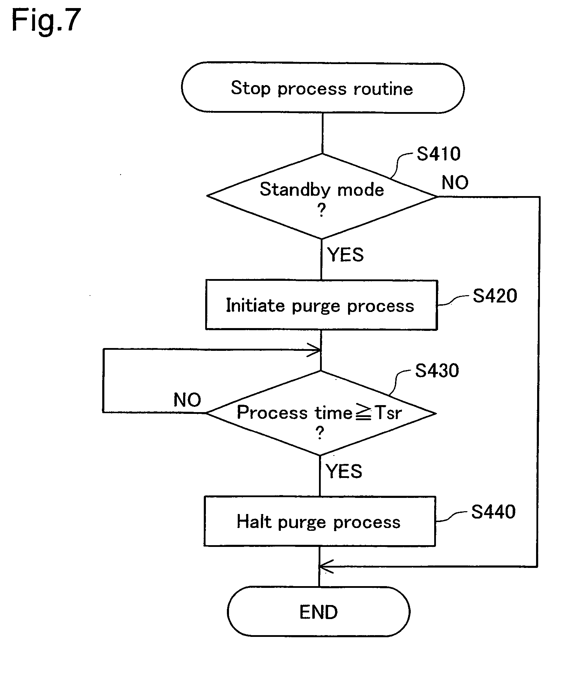

FIG. 7 is a flowchart representing the stop process routine executed in Step S400 of FIG. 4. The process is executed by the controller 50 when the restart process flag is off and the stop flag is on. When the routine is started up, the controller 50 decides whether the fuel cell system 20 is in Standby mode (Step S410).

If the decision in Step S410 is that the system is in Standby mode, the controller 50 initiates a purge process to bring the system from Standby mode to Stop mode (Step S420). The purge process refers to a process whereby fuel gas in the fuel gas flow passage of the fuel cell 60 is scavenged with air. Specifically, with the valve 74 in the open state, the blower 67 is activated to supply air into the fuel cell 60 through the mixer 62 and the reformer 64. By means of this procedure the fuel gas within the fuel cell 60 is replaced with air.

The controller 50 then decides whether the time elapsed since initiating the purge process is equal to or greater than Tₛᵣ (Step S430). Tₛᵣ is pre-stored in memory in the controller 50, as the amount of time needed for fuel gas within the fuel cell 60 to be expelled sufficiently by the air. If in Step S430 the elapsed time is equal to or greater than Tₛᵣ, the controller 50 halts the purge process (Step S440) and terminates the routine. Specifically, it halts the blower 67.

If the decision in Step S410 is that the system is not in Standby mode, since the system is already in Stop mode, the controller 50 terminates the routine. The fuel cell system 20 is maintained in Stop mode thereby.

In the fuel cell system 20 of this embodiment, entry into Stop mode is always preceded by Standby mode; however, it would also be possible to execute a decision whereby the fuel cell 60 is switched directly into Stop mode from a power generating state. In this case, in the stop process routine, it would first be decided whether power generation is currently taking place, and if so, the fuel cell 60 would be switched to an open circuit and the supply of reforming feedstock and water vapor to the reformer 64 would be halted, then a purging process would be carried out.

When the standby process flag or the stop process flag mentioned previously is on, the fuel cell system 20 is in Standby mode or in Stop mode, and is not supplying power. Accordingly, the controller 50 controls the power supply system 15 so that the power required during this period will be output by the secondary cell 22.

### B5. Restart Process:

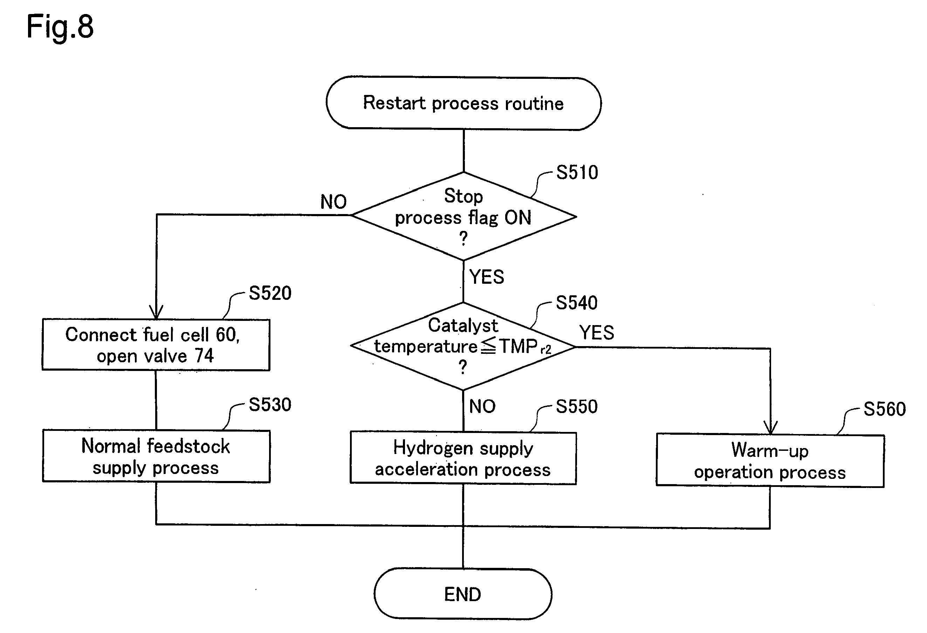

FIG. 8 is a flowchart representing the restart process routine executed in Step S500 of FIG. 4. The process is executed by the controller 50 when the standby process flag or the stop process flag is on, and the restart process flag has gone on as well. In FIG. 4, selection of either the standby process, the stop process, the restart process or normal processing with reference to the acquired flags is depicted, but the restart process routine is also started up even during execution of the standby process routine or the stop process routine, by interrupting the process when the restart process flag has gone on in the control decision routine depicted in FIG. 5.

When the routine starts up, the controller 50 decides whether the stop process flag is on (Step S510). If the stop process flag is off (i.e. the standby process flag is on), the restart process will take place from Standby mode; in this case, the controller 50 connects the fuel cell 60 to the wiring 40 and opens the valve 74 (Step S520), then initiates normal feedstock supply process (Step S530) and terminates the routine. The normal feedstock supply process refers to the feedstock supply process during normal operation, for generating power on the basis of the required output. In Standby mode, since fuel gas is stored in the fuel gas flow passage within the fuel cell, during restart from Standby mode it is possible to carry out normal feedstock supply to obtain the desired power.

In Step S510, if the stop process flag is on, the restart process will take place from Stop mode; in this case, the controller 50 decides whether the temperature of the reforming catalyst of the reformer 64 is equal to or less than TMPᵣ₂ (Step S540). The temperature TMPᵣ₂ represents the lower limit at which the reforming reaction of the reformer 64 is able to proceed; if the temperature of the reforming catalyst is equal to or less than TMPᵣ₂, the reformer 64 will be able to produce substantially no hydrogen. Accordingly, if the temperature of the reforming catalyst is equal to or less than TMPᵣ₂, a warm-up operation process is executed (Step S560) and the routine is terminated. By means of executing the warm-up operation process, the reformer 64 and other parts in the fuel cell system 20 are warmed up.

In Step S540, if the temperature of the reforming catalyst is greater than TMPᵣ₂, the reformer 64 is in a state able to produce hydrogen to a certain extent, although not as much as required; so the controller 50 next executes a hydrogen supply acceleration process (Step S550), and terminates the routine. The hydrogen supply acceleration process is a process for supplying the reformer 64 with a larger amount of reforming feedstock than during normal operation, when the power required of the fuel cell 60 is equal to or less than a prescribed value. As mentioned previously, in Stop mode, the fuel gas within the fuel cell 60 is replaced with air, so an adequate amount of hydrogen cannot be supplied quickly to the anode during restart. By carrying out the hydrogen supply acceleration process, it is possible to quickly replace the air within the fuel cell 60 with fuel gas.

In the hydrogen supply acceleration process, if the required power exceeds a prescribed level, the amount of reforming feedstock supplied to the reformer 64 is set depending on the required power in the same manner as during normal operation, but when the required power is equal to or less than the prescribed value, a constant amount of reforming feedstock larger than that during normal operation is supplied to the reformer 64. By so doing, it is possible to ensure a given level for the amount of fuel gas supplied to the fuel cell 60 even in the event that the required power level is low, so that the operation to replace air within the fuel cell 60 with fuel gas can be accelerated. The amount of feedstock supplied to the reformer 64 when the required power level is equal to or less than the prescribed value need not be a constant amount: as long as the reforming feedstock is supplied to the reformer 64 in a greater amount than during normal operation, it is possible to produce the effect of accelerating the operation of replacing the air within the fuel cell 60 with fuel gas. The prescribed level used here as the criterion in regard to the required power can be established appropriately in consideration of factors such as the capabilities of the reformer 64 in Stop mode, the effect obtained by increasing the amount of reforming feedstock supplied, the extent of the drop in efficiency produced by an excessive amount of reforming feedstock, and so on. In the hydrogen supply acceleration process, the time interval for which the supply of reforming feedstock exceeds that during normal operation may be set to a time interval permitting air present within the fuel cell 60 to be replaced sufficiently with fuel gas.

In Step S510, when the stop flag is on, in the event that at that point in time the controller 50 is executing the purge process (Steps S420 -440 of FIG. 7), the purge process will be halted when commencing the aforementioned warm-up operation process or hydrogen supply acceleration process.

When the restart process routine depicted in FIG. 8 is terminated, the controller 50 sets all of the flags to off.

### C. Effects:

According to the power supply system 15 of the embodiment having the arrangement described above, when power generation by the fuel cell 60 is stop, a purge process is carried out to scavenge the fuel gas within the fuel cell 60, and thus the hydrogen-permeable metal layers making up the substrate 84 and the thin films 82, 86 furnished to the fuel cell 60 do not experience hydrogen permeable during stop of power generation by the fuel cell 60. Here, when shutting off power generation by the fuel cell 60, the determination as to whether to perform the purge process is made on the basis of the information representing the operational status of the power supply system 15 (start switch on/off, shift position, etc.) and information reflecting change in the power required of the power supply system 15 (level of accelerator depression, brake on/off etc.); and under conditions in which it can be predicted that power generation will be stop for a relatively brief period, Standby mode is selected without carrying out the purge process. Thus, when power generation is resumed (restarted) within a short time after stop, it is possible to obtain the desired level of power immediately, reducing the restart time and holding down energy loss during restart.

The power supply system 15 refers to information reflecting generation efficiency of the fuel cell system 20, such as required output, vehicle speed, accelerator depression etc., and under conditions where generation efficiency is poor, puts the fuel cell system 20 in Standby mode and obtains power from the secondary cell 22. By so doing, the power supply system 15 can be operated more efficiently.

In the power supply system 15, if the state of charge of the secondary cell 22 is equal to or less than a prescribed value, even if another condition dictating that power generation by the fuel cell 60 should be stop is met, the fuel cell system 20 will not be stop immediately, but will instead shut be off only after the secondary cell 22 has been charged by the fuel cell 60. By so doing, during restart of the fuel cell system 20, the power needed can be obtained from the secondary cell 22.

In the power supply system 15, when power generation by the fuel cell 60 is stop, if the reforming catalyst temperature exceeds a prescribed temperature Standby mode is selected without entering Stop mode. Thus, for the period that a temperature enabling immediate operation of the reformer 64 is maintained, immediate power generation is possible in the event that the system should be restarted. It would also be possible to additionally refer to temperature of some area, other than the reformer 64, which is a part of the fuel cell system 20 and which operates at a prescribed high temperature; and to not carry out the purge process for the period that immediate operation is possible for this other area besides the fuel cell 60. By so doing, it is possible to avoid situations where the restart operation is delayed due to the purge process being carried out.

In the power supply system 15, even after the purge process has commenced, if the restart process flag should go on, the restart process routine will start up and the purge process will be halted. Here, the restart process flag is set to on due to the start switch being turned on; to the shift position being other than P or N; to the vehicle speed, accelerator depression or required output being equal to or greater than a prescribed value; or to the brake being off. That is, the restart process flag will be set to on when the actuation status of an actuating unit for driving the electric vehicle 10 assumes a state representing the intention on the part of the driver to drive the electric vehicle 10. Accordingly, there can be assumed a state in which, when the driver intends to drive the electric vehicle 10, it is possible to quickly obtain the desired power from the fuel cell 60.

Here, in FIG. 5, when all of the conditions indicated in Steps S100 -S130 representing intention on the part of the driver to drive the electric vehicle 10 are met, the restart process flag is set to on and the purge process is halted; however, it would also be acceptable instead to halt the purge process when at least one of the conditions is met. During execution of the purge process, even if that conditions should come to indicate intention on the part of the driver to drive the electric vehicle 10, in the event that the fuel cell 60 temperature sensed by the temperature sensor 69 is a prescribed temperature such that the generation efficiency of the fuel cell would be poor, it would be acceptable to continue the purge process as-is. By means of such an arrangement, the desired power can be obtained from the secondary cell 22, without the energy efficiency of the system suffering due to the fuel cell 60 being at low temperature.

### D. Variations:

The invention is not limited to the embodiment set forth hereinabove, and may be reduced to practice in various other forms without departing from the scope of the attached claims. The following variations are possible, for example.
(1) In the embodiment, the decision as to whether the purge process will be carried out is made at stop of power generation by the fuel cell 60; however, a different arrangement would be acceptable. For example, during stop of power generation, Standby mode could be selected without performing the purge process, and subsequent a decision made as to whether the system has transitioned to Stop mode. Alternatively, the system may transition to Stop mode once a prescribed time interval has elapsed since entering Standby mode.
(2) While the fuel cell 60 of the embodiment herein is a solid electrolyte fuel cell, the invention is applicable to fuel cells of different types. As long as a fuel cell is furnished with hydrogen-permeable metal layers, the invention can be applied to afford similar working effects, by carrying out control with regard to the purge process during stop of power generation. An example of another fuel cell furnished with hydrogen-permeable metal layers is a solid polymer fuel cell.

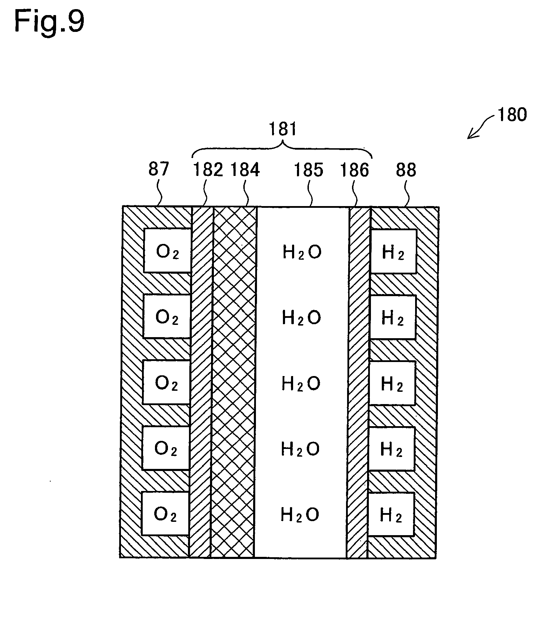

FIG. 9 is a typical sectional view depicting the structure of a unit cell 180 making up a solid polymer fuel cell pertaining to a variation. The unit cell 180 has a structure in which an electrolyte portion 181 is sandwiched between gas separators 87, 88 similar to the embodiment. Between the gas separator 87 and the electrolyte portion 181 there is formed an oxidant gas flow passage for passage of the oxidant gas. Between the gas separator 88 and the electrolyte portion 181 there is formed a fuel gas flow passage for passage of the fuel gas.

The electrolyte portion 181 is of multilayer construction with an electrolyte layer 185 formed of a solid polymer membrane sandwiched on either side by dense layers of hydrogen-permeable metal. As the electrolyte layer 185 it would be possible to use NAFION (TM) or the like. On the face of the electrolyte layer 185 on the anode side is disposed a dense layer of palladium (Pd) 186. On the cathode side is disposed a dense layer of vanadium-nickel alloy (V-Ni) 184. On the cathode side of the dense layer 184 is disposed another dense layer of Pd 182.

The electrolyte layer 185 contains moisture, and as a result of containing moisture exhibits proton conductivity. As noted, the electrolyte layer 185 is sandwiched on either side by dense layers 184, 186, so that the moisture within the electrolyte layer 185 is retained well. In this way, by employing a construction able to retain moisture in the solid polymer membrane, a fuel cell composed of the unit cells 180 can operate at temperatures of 200 -600° C, higher than the operating temperatures of conventional solid polymer fuel cells.

As the electrolyte layers in fuel cells of a type furnished with hydrogen-permeable metal layers on either side of an electrolyte layer to retain moisture in the hydrated electrolyte layer, it would be possible to employ, instead of a solid polymer membrane, a hetero polyacid based, hydrated β alumina based, or other ceramic, glass, or alumina based membrane containing moisture.
(3) In the fuel cell system 20 of the embodiment, the cathode off-gas is supplied to the reformer 64, but a different arrangement would be possible. The oxygen supplied to the reformer 64 may be air taken in separately from the outside. Also, it is possible to use a gas other than air as the gas used for scavenging the fuel gas in the purge process.
(4) In the fuel cell system 20 of the embodiment, the reformed gas produced from the reforming feedstock by the reformer 64 is supplied as the fuel gas to the fuel cell 60, but a different arrangement would be possible. For example, it would be acceptable to provide a hydrogen storage portion for storing highly pure hydrogen gas, as using this hydrogen gas as the fuel gas. The hydrogen storage portion could be a hydrogen cylinder, or a hydrogen tank furnished inside with a hydrogen-occluding alloy. Such an arrangement can also afford similar working effects through implementing the invention.
(5) While the power supply system 15 of the embodiment is furnished with a secondary cell 22, the invention can also be implemented in a power supply system lacking a secondary cell.
(6) Whereas in the preceding embodiment the power supply system 15 is used as the drive power supply for an electric vehicle 10, it could also be used as the drive power supply for another type of mobile object. The power supply system 15 could also be a power supply device of stationary design.

## Claims

1. A power supply system (15) for outputting power, comprising:
a fuel cell (60) furnished with a proton-conductive electrolyte layer and a hydrogen-permeable metal layer joined to the electrolyte layer;
a fuel gas feeder for feeding a hydrogen-containing fuel gas to the anode side of the fuel cell;
a purge gas feeder for feeding a purge gas devoid of hydrogen to the anode side of the fuel cell;
a purge decision unit (50) that, once power generation in the fuel cell (60) stops, decides whether a purge condition under which the purge gas should be supplied to the anode side of the fuel cell (60) is met; and
a purge controller (50) that, in the event that the purge decision unit (50) decides that the purge condition is met, actuates the purge gas feeder to replace the fuel gas within the fuel cell (60) with the purge gas, or in the event that the purge decision unit (50) decides that the purge condition is not met, does not actuate the purge gas feeder.

2. A power supply system (15) according to Claim 1 wherein the decision by the purge decision unit (50) as to whether the purge condition is met is executed on the basis of prescribed information representing the operational status of the power supply system (15) and/or prescribed information reflecting change in the power required by the power supply system (15).

3. A power supply system (15) according to Claim 1 wherein the purge controller (50) actuates the purge gas feeder once a prescribed time period has elapsed after power generation by the fuel cell (60) has stop.

4. A power supply system (15) according to any of Claims 1 to 3 further comprising a fuel gas pressurizing unit (61) that, once power generation by the fuel cell (60) has stopped but the purge gas supply portion is not actuated, raises the pressure of the fuel gas in the fuel gas flow passage formed in the fuel cell (60).

5. A power supply system (15) according to Claim 4 wherein the fuel gas pressurizing unit (61) raises the pressure of the fuel gas by actuating the fuel gas feeder to supply the fuel gas, while blocking the outlet of the fuel gas flow passage.

6. A power supply system (15) according to Claim 2 further comprising a temperature sensing unit (63, 69) for sensing temperature at a prescribed location that is part of the power supply system (15) and that operates at a temperature which rises to a prescribed high temperature during power generation by the fuel cell (60),
wherein the purge decision unit (50) decides that the purge condition is met as long as the temperature sensed by the temperature sensing unit (63, 69) does not go above a prescribed value.

7. A power supply system (15) according to any of Claims 1, 2 and 6 wherein when power generation by the fuel cell (60) commences after the purge gas feeder has been actuated, the fuel gas feeder supplies the fuel cell with fuel gas at a level in excess of the level corresponding to the power to be generated by the fuel cell (60).

8. A power supply system (15) according to Claim 7 wherein the fuel gas feeder, when the power to be generated by the fuel cell (60) is equal to or less than a prescribed value, supplies the fuel gas at a level in excess of the level corresponding to the power to be generated; or when the power to be generated is greater than the prescribed value, supplies the fuel gas at a level corresponding to the power to be generated.

9. A power supply system (15) according to any of Claims 1, 2 and 8 further comprising a secondary cell (22).

10. A power supply system (15) according to Claim 9 further comprising a state of charge sensing unit (23) for sensing the state of charge of the secondary cell (22),
wherein in the event that the state of charge is equal to or less than a prescribed value, charging of the secondary cell (22) is carried out using the fuel cell (60), with priority over the operation of shutting off power generation by the fuel cell (60).

11. A power supply system (15) according to Claim 2 further comprising.
a secondary cell (22); and
an output request acquiring unit for acquiring an output request to the power supply system (15);
wherein when the output request acquired by the output request acquiring unit is equal to or less than a prescribed value, the purge decision unit (50) decides that the purge condition is not met, and outputs power from the secondary cell (22).

12. A mobile object (10) comprising:
the power supply system (15) according to any of Claims 1, 2 and 11 installed on board as a drive energy supply.

13. A mobile object comprising:
the power supply system (15) according to Claim 1 installed on board as a drive energy supply; and
a predetermined start switch enabling driving of the mobile object;
wherein the purge controller actuates the purge gas feeder once a prescribed time period has elapsed after the start switch has turned off and power generation by the fuel cell has stopped.

14. A mobile object comprising:
the power supply system (15) according to Claim 2 installed on board as a drive energy supply; and
a predetermined start switch enabling driving of the mobile object;
wherein when the start switch has turned off, the purge decision unit (50) decides that the purge condition is met.

15. A mobile object comprising:
the power supply system (15) according to any of Claims 1, 2 and 8 installed on board as a drive energy supply; and
an actuation status acquiring unit that acquires the actuation status from an actuating unit for driving the mobile object, which actuation status indicates an intention of a driver to drive the mobile object;
wherein after the purge gas feeder has been actuated during stop of the fuel cell, when the actuation status acquiring unit has acquired the actuation status after the purge gas feeder has been actuated during stop of the fuel cell, the purge controller (50) halts the purge gas feeder.

16. A mobile object according to Claim 15 wherein
the power supply system (15) further comprises a temperature sensing unit (69) for sensing the temperature of the fuel cell (60), and a secondary cell (22) serving as another drive energy supply for the mobile object;
wherein when the fuel cell temperature sensed by the temperature sensing unit (69) is equal to or less than a prescribed value, the purge controller (50) continues to actuate the purge gas feeder, even in the event that the actuation status acquiring unit has acquired the actuation status after the purge gas feeder has been actuated during stop of the fuel cell (60).

17. A method of stop a power supply system (15), comprising the steps of:
(a) during power generation by a fuel cell (60) comprising a proton-conductive electrolyte layer and a hydrogen-permeable metal layer joined to the electrolyte layer, by supplying a hydrogen-containing fuel gas to the anode side of the fuel cell (60), acquiring a stop condition of the fuel cell;
(b) after acquiring the stop condition in step (a), selecting, as operating mode of the power supply system (15), an operating mode that is either a standby mode wherein power generation is halted while holding the fuel gas in the fuel gas flow passage within the fuel cell (60), or a stop mode wherein power generation is halted without holding the fuel gas in the fuel gas flow passage within the fuel cell (60); and
(c) in the event that the stop mode has been selected, supplying a purge gas devoid of hydrogen to the fuel gas flow passage within the fuel cell.

## Patentansprüche

1. Leistungszuführsystem (15) zur Ausgabe einer Leistung, mit:
einer Brennstoffzelle (60), die mit einer protonenleitfähigen Elektrolytschicht und einer Wasserstoff durchlässigen Metallschicht ausgestattet ist, die an die Elektrolytschicht angefügt ist,
einer Brennstoffgaszufuhreinrichtung zum Zuführen eines Wasserstoff beinhaltenden Brennstoffgases zu der Anodenseite der Brennstoffzelle,
einer Spülgaszufuhreinrichtung zum Zuführen eines Spülgases, das frei von Wasserstoff ist, zu der Anodenseite der Brennstoffzelle,
einer Spülungsentscheidungseinheit (50), die, sobald eine Leistungserzeugung in der Brennstoffzelle (60) stoppt, entscheidet, ob eine Spülungsbedingung, unter der das Spülgas zu der Anodenseite der Brennstoffzelle (60) zugeführt werden sollte, erfüllt ist, und
einer Spülungssteuerungseinrichtung (50), die in dem Fall, dass die Spülungsentscheidungseinheit (50) entscheidet, dass die Spülungsbedingung erfüllt ist, die Spülgaszufuhreinrichtung betätigt, um das Brennstoffgas in der Brennstoffzelle (60) mit dem Spülgas zu ersetzen, oder in dem Fall, dass die Spülungsentscheidungseinheit (50) entscheidet, dass die Spülungsbedingung nicht erfüllt ist, die Spülgaszufuhreinrichtung nicht betätigt.

2. Leistungszufuhrsystem (15) nach Anspruch 1, wobei die Entscheidung durch die Spülungsentscheidungseinheit (50), ob die Spülungsbedingung erfüllt ist, auf der Grundlage einer vorgeschriebenen Information, die den Betriebsstatus des Leistungszufuhrsystems (15) darstellt, und/oder einer vorgeschriebenen Information ausgeführt wird, die eine Änderung in der Leistung reflektiert, die durch das Leistungszufuhrsystem (15) benötigt wird.

3. Leistungszufuhrsystem (15) nach Anspruch 1, wobei die Spülungssteuerungseinrichtung (50) die Spülgaszufuhreinrichtung betätigt, sobald eine vorgeschriebene Zeitdauer abgelaufen ist, nachdem eine Leistungserzeugung durch die Brennstoffzelle (60) gestoppt hat.

4. Leistungszufuhrsystem (15) nach einem der Ansprüche 1 bis 3, ferner mit einer Brennstoffgasdruckbeaufschlagungseinheit (61), die, sobald eine Leistungserzeugung durch die Brennstoffzelle (60) gestoppt hat, aber der Spülgaszufuhrabschnitt nicht betätigt worden ist, den Druck des Brennstoffgases in dem Brennstoffgasströmungskanal erhöht, der in der Brennstoffzelle (60) ausgebildet ist.

5. Leistungszufuhrsystem nach Anspruch 4, wobei die Brennstoffgasdruckbeauschlagungseinheit (61) den Druck des Brennstoffgases erhöht, indem die Brennstoffgaszufuhreinrichtung betätigt wird, um das Brennstoffgas zuzuführen, während der Auslass des Brennstoffgasströmungskanals blockiert wird.

6. Leistungszuführsystem (15) nach Anspruch 2, ferner mit einer Temperaturerfassungseinheit (63, 69) zur Erfassung einer Temperatur bei einer vorgeschriebenen Stelle, die ein Teil des Leistungszufuhrsystems (15) ist und die bei einer Temperatur operiert, die zu einer vorgeschriebenen hohen Temperatur während einer Leistungserzeugung durch die Brennstoffzelle (60) ansteigt,
wobei die Spülungsentscheidungseinheit (50) entscheidet, dass die Spülungsbedingung erfüllt ist, solange die Temperatur, die durch die Temperaturerfassungseinheit (63, 69) erfasst wird, nicht über einen vorgeschriebenen Wert hinaus geht.

7. Leistungszuführsystem (15) nach einem der Ansprüche 1, 2 und 6, wobei, wenn eine Leistungserzeugung durch die Brennstoffzelle (60) beginnt, nachdem die Spülgaszufuhreinrichtung betätigt worden ist, die Brennstoffgaszufuhreinrichtung der Brennstoffzelle Brennstoffgas bei einem Pegel zuführt, der höher als der Pegel ist, der der Leistung entspricht, die durch die Brennstoffzelle (60) zu erzeugen ist.

8. Leistungszufuhrsystem (15) nach Anspruch 7, wobei die Brennstoffgaszufuhreinrichtung, wenn die durch die Brennstoffzelle (60) zu erzeugende Leistung kleiner oder gleich einem vorgeschriebenen Wert ist, das Brennstoffgas bei einem Pegel zuführt, der höher als der Pegel ist, der der zu erzeugenden Leistung entspricht; oder, wenn die zu erzeugenden Leistung größer als der vorgeschriebene Wert ist, das Brennstoffgas bei einem Pegel zuführt, der der zu erzeugenden Leistung entspricht.

9. Leistungszuführsystem (15) nach einem der Ansprüche 1, 2 und 8, ferner mit einer Sekundärzelle (22).

10. Leistungszuführsystem (15) nach Anspruch 9, ferner mit einer Ladungszustandserfassungseinheit (23) zur Erfassung des Ladungszustands der Sekundärzelle (22),
wobei in dem Fall, dass der Ladungszustand kleiner oder gleich einem vorgeschriebenen Wert ist, ein Aufladen der Sekundärzelle (22) unter Verwendung der Brennstoffzelle (60) ausgeführt wird, wobei eine Priorität gegenüber dem Betrieb zum Abschalten einer Leistungserzeugung durch die Brennstoffzelle (60) gegeben ist.

11. Leistungszufuhrsystem (15) nach Anspruch 2, ferner mit:
einer Sekundärzelle (22), und
einer Ausgabeanforderungserfassungseinheit zur Erfassung einer Ausgabeanforderung an das Leistungszufuhrsystem (15),
wobei, wenn die Ausgabeanforderung, die durch die Ausgabeanforderungserfassungseinheit erfasst wird, kleiner oder gleich einem vorgeschriebenen Wert ist, die Spülungsentscheidungseinheit (50) entscheidet, dass die Spülungsbedingung nicht erfüllt ist, und Leistung von der Sekundärzelle (22) ausgibt.

12. Mobiler Gegenstand (10) mit:
dem Leistungszufuhrsystem (15) nach einem der Ansprüche 1, 2 und 11, die im Gegenstand als eine Antriebsenergiezufuhr eingebaut sind.

13. Mobiler Gegenstand mit:
dem Leistungszufuhrsystem (15) nach Anspruch 1, das im Gegenstand als eine Antriebsenergiezufuhr eingebaut ist, und
einem vorbestimmten Startschalter, der ein Antreiben des mobilen Gegenstands ermöglicht,
wobei die Spülungssteuerungseinrichtung die Spülgaszufuhreinrichtung betätigt, sobald eine vorgeschriebene Zeitdauer abgelaufen ist, nachdem der Startschalter ausgeschaltet worden ist und eine Leistungserzeugung durch die Brennstoffzelle gestoppt hat.

14. Mobiler Gegenstand mit:
dem Leistungszufuhrsystem (15) nach Anspruch 2, das im Gegenstand als eine Antriebsenergiezufuhr eingebaut ist, und
einem vorbestimmten Startschalter, der ein Antreiben des mobilen Gegenstands ermöglicht,
wobei, wenn der Startschalter ausgeschaltet worden ist, die Spülungsentscheidungseinheit (50) entscheidet, dass die Spülungsbedingung erfüllt ist.

15. Mobiler Gegenstand mit:
dem Leistungszufuhrsystem (15) nach einem der Ansprüche 1, 2 und 8, das im Gegenstand als eine Antriebsenergiezufuhr eingebaut ist, und
einer Betätigungsstatuserfassungseinheit, die den Betätigungsstatus von einer Betätigungseinheit zum Antreiben des mobilen Gegenstands erfasst, wobei der Betätigungsstatus eine Absicht eines Fahrers angibt, den mobilen Gegenstand anzutreiben,
wobei, nachdem die Spülgaszufuhreinrichtung während eines Stopps der Brennstoffzelle betätigt worden ist, wenn die Betätigungsstatuserfassungseinheit den Betätigungsstatus erfasst hat, nachdem die Spülgaszufuhreinrichtung während eines Stopps der Brennstoffzelle betätigt worden ist, die Spülungssteuerungseinrichtung (50) die Spülgaszufuhreinrichtung anhält.

16. Mobiler Gegenstand nach Anspruch 15, wobei
das Leistungszufuhrsystem (15) ferner eine Temperaturerfassungseinheit (69) zur Erfassung der Temperatur der Brennstoffzelle (60) und eine Sekundärzelle (22) umfasst, die als eine andere Antriebsenergiezufuhr für den mobilen Gegenstand dient,
wobei, wenn die Brennstoffzellentemperatur, die durch die Temperaturerfassungseinheit (69) erfasst wird, kleiner oder gleich einem vorgeschriebenen Wert ist, die Spülungssteuerungseinrichtung (50) damit fortfährt, die Spülgaszufuhreinrichtung zu betätigen, auch in dem Fall, dass die Betätigungsstatuserfassungseinheit den Betätigungsstatus erfasst hat, nachdem die Spülgaszufuhreinrichtung während eines Stopps der Brennstoffzelle (60) betätigt worden ist.

17. Verfahren zum Stoppen eines Leistungszufuhrsystems (15), mit Schritten:
(a) während einer Leistungserzeugung durch eine Brennstoffzelle (60), die eine protonenleitfähige Elektrolytschicht und eine Wasserstoff durchlässige Metallschicht umfasst, die an die Elektrolytschicht angefügt ist, indem ein Wasserstoff beinhaltendes Brennstoffgas der Anodenseite der Brennstoffzelle (60) zugeführt wird, zum Erfassen einer Stoppbedingung der Brennstoffzelle,
(b) nach einer Erfassung der Stoppbedingung in Schritt (a) zum Auswählen einer Betriebsart, die entweder eine Bereitschaftsbetriebsart ist, wobei eine Leistungserzeugung angehalten ist, während das Brennstoffgas in dem Brennstoffgasströmungskanal innerhalb der Brennstoffzelle (60) gehalten wird, oder eine Stoppbetriebsart ist, wobei eine Leistungserzeugung angehalten ist, ohne dass das Brennstoffgas in dem Brennstoffgasströmungskanal innerhalb der Brennstoffzelle (60) gehalten wird, als eine Betriebsart des Leistungszufuhrsystems (15), und
(c) in dem Fall, dass die Stoppbetriebsart ausgewählt worden ist, zum Zuführen eines Spülgases, das frei von Wasserstoff ist, zu dem Brennstoffgasstömungskanal innerhalb der Brennstoffzelle.

## Revendications

1. Système d'alimentation (15) pour délivrer une énergie, comprenant :
une pile à combustible (60) pourvue d'une couche d'électrolyte conducteur de protons et d'une couche métallique perméable à l'hydrogène jointe à la couche d'électrolyte ;
un dispositif d'alimentation en combustible gazeux pour fournir un combustible gazeux contenant de l'hydrogène au côté d'anode de la pile à combustible ;
un dispositif d'alimentation en gaz de purge pour délivrer un gaz de purge dépourvu d'hydrogène au côté d'anode de la pile à combustible ;
une unité de décision de purge (50) qui, une fois que la génération d'énergie dans la pile à combustible (60) a cessé, décide si une condition de purge dans laquelle le gaz de purge devrait être délivré au côté d'anode de la pile à combustible (60) est satisfaite ; et
un contrôleur de purge (50) qui, dans le cas où l'unité de décision de purge (50) décide que la condition de purge est satisfaite, actionne le dispositif d'alimentation en gaz de purge pour remplacer le combustible gazeux dans la pile à combustible (60) par le gaz de purge, ou dans le cas où l'unité de décision de purge (50) décide que la condition de purge n'est pas satisfaite, n'actionne pas le dispositif d'alimentation en gaz de purge.

2. Système d'alimentation (15) selon la revendication 1, dans lequel la décision de l'unité de décision de purge (50) que la condition de purge est satisfaite est prise sur la base d'informations prescrites représentant l'état de fonctionnement du système d'alimentation (15) et/ou d'informations prescrites reflétant une variation de l'énergie nécessaire au système d'alimentation (15).

3. Système d'alimentation (15) selon la revendication 1, dans lequel le contrôleur de purge (50) actionne le dispositif d'alimentation en gaz de purge une fois qu'une période de temps prescrite s'est écoulée après que la génération d'énergie par la pile à combustible (60) a cessé.

4. Système d'alimentation (15) selon l'une quelconque des revendications 1 à 3, comprenant en outre une unité de pressurisation de combustible gazeux (61) qui, une fois que la génération d'énergie par la pile à combustible (60) a cessé mais tant que la partie d'alimentation en gaz de purge n'a pas été actionnée, élève la pression du combustible gazeux dans le passage d'écoulement de combustible gazeux formé dans la pile à combustible (60).

5. Système d'alimentation (15) selon la revendication 4, dans lequel l'unité de pressurisation de combustible gazeux (61) élève la pression du combustible gazeux en actionnant le dispositif d'alimentation en combustible gazeux pour fournir le combustible gazeux, tout en bloquant la sortie du passage d'écoulement de combustible gazeux.

6. Système d'alimentation (15) selon la revendication 2, comprenant en outre une unité de détection de température (63, 69) pour détecter la température à un emplacement prescrit qui fait partie du système d'alimentation (15) et qui fonctionne à une température qui s'élève à une température élevée prescrite pendant la génération d'énergie par la pile à combustible (60),
dans lequel l'unité de décision de purge (50) décide que la condition de purge est satisfaite tant que la température détectée par l'unité de détection de température (63, 69) ne dépasse pas une valeur prescrite.

7. Système d'alimentation (15) selon l'une quelconque des revendications 1, 2 et 6, dans lequel, lorsque la génération d'énergie par la pile à combustible (60) commence après que le dispositif d'alimentation en gaz de purge a été actionné, le dispositif d'alimentation en combustible gazeux délivre à la pile à combustible le combustible gazeux à un niveau dépassant le niveau correspondant à l'énergie à générer par la pile à combustible (60).

8. Système d'alimentation (15) selon la revendication 7, dans lequel le dispositif d'alimentation en combustible gazeux, lorsque l'énergie à générer par la pile à combustible (60) est égale ou inférieure à une valeur prescrite, délivre le combustible gazeux à un niveau dépassant le niveau correspondant à l'énergie à générer ; ou lorsque l'énergie à générer est supérieure à la valeur prescrite, délivre le combustible gazeux à un niveau correspondant à l'énergie à générer.

9. Système d'alimentation (15) selon l'une quelconque des revendications 1, 2 et 8 comprenant en outre une pile secondaire (22).

10. Système d'alimentation (15) selon la revendication 9, comprenant en outre une unité de détection d'état de charge (23) pour détecter l'état de charge de la pile secondaire (22),
dans lequel, dans le cas où l'état de charge est égal ou inférieur à une valeur prescrite, la charge de la pile secondaire (22) est effectuée en utilisant la pile à combustible (60), avec une priorité sur l'opération de coupure de la génération d'énergie par la pile à combustible (60).

11. Système d'alimentation (15) selon la revendication 2, comprenant en outre :
une pile secondaire (22) ; et
une unité d'acquisition de demande de sortie pour acquérir une demande de sortie pour le système d'alimentation (15) ;
dans lequel, lorsque la demande de sortie acquise par l'unité d'acquisition de demande de sortie est égale ou inférieure à une valeur prescrite, l'unité de décision de purge (50) décide que la condition de purge n'est pas satisfaite, et délivre l'énergie à partir de la pile secondaire (22).

12. Objet mobile (10) comprenant :
le système d'alimentation (15) selon l'une quelconque des revendications 1, 2 et 11 installé à bord en tant qu'alimentation en énergie d'entraînement.

13. Objet mobile comprenant :
le système d'alimentation (15) selon la revendication 1, installé à bord en tant qu'alimentation en énergie d'entraînement ; et
un commutateur de démarrage prédéterminé permettant l'entraînement de l'objet mobile ;
dans lequel le contrôleur de purge actionne le dispositif d'alimentation en gaz de purge une fois qu'une période de temps prescrite s'est écoulée après que le commutateur de démarrage a été ouvert et que la génération d'énergie par la pile à combustible a cessé.

14. Objet mobile comprenant :
le système d'alimentation (15) selon la revendication 2, installé à bord en tant qu'alimentation en énergie d'entraînement ; et
un commutateur de démarrage prédéterminé permettant l'entraînement de l'objet mobile ;
dans lequel, lorsque le commutateur de démarrage a été ouvert, l'unité de décision de purge (50) décide que la condition de purge est satisfaite.

15. Objet mobile comprenant :
le système d'alimentation (15) selon l'une quelconque des revendications 1, 2 et 8 installé à bord en tant qu'alimentation en énergie d'entraînement ; et
une unité d'acquisition d'état d'actionnement qui acquiert l'état d'actionnement d'une unité d'actionnement pour entraîner l'objet mobile, lequel état d'actionnement indique une intention d'un conducteur de commander l'objet mobile ;
dans lequel, après que le dispositif d'alimentation en gaz de purge a été actionné pendant un arrêt de la pile à combustible, lorsque l'unité d'acquisition d'état d'actionnement a acquis l'état d'actionnement après que le dispositif d'alimentation en gaz de purge a été actionné pendant l'arrêt de la pile à combustible, le contrôleur de purge (50) arrête le dispositif d'alimentation en gaz de purge.

16. Objet mobile selon la revendication 15, dans lequel le système d'alimentation (15) comprend en outre une unité de détection de température (69) pour détecter la température de la pile à combustible (60), et une pile secondaire (22) servant en tant qu'autre alimentation en énergie d'entraînement pour l'objet mobile ;
dans lequel, lorsque la température de la pile à combustible détectée par l'unité de détection de température (69) est égale ou inférieure à une valeur prescrite, le contrôleur de purge (50) continue d'actionner le dispositif d'alimentation en gaz de purge, même dans le cas où l'unité d'acquisition d'état d'actionnement a acquis l'état d'actionnement après que le dispositif d'alimentation en gaz de purge a été actionné pendant un arrêt de la pile à combustible (60).

17. Procédé d'arrêt d'un système d'alimentation (15), comprenant les étapes consistant à :
(a) pendant la génération d'énergie par une pile à combustible (60) comprenant une couche d'électrolyte conducteur de protons et une couche métallique perméable à l'hydrogène jointe à la couche d'électrolyte, en fournissant un combustible gazeux contenant de l'hydrogène au côté d'anode de la pile à combustible (60), acquérir une condition d'arrêt de la pile à combustible ;
(b) après avoir acquis la condition d'arrêt à l'étape (a), sélectionner, en tant que mode de fonctionnement du système d'alimentation (15), un mode de fonctionnement qui est soit un mode d'attente dans lequel la génération d'énergie est arrêtée tout en maintenant le combustible gazeux dans le passage d'écoulement de combustible gazeux dans la pile à combustible (60), soit un mode d'arrêt dans lequel la génération d'énergie est arrêtée sans maintenir le combustible gazeux dans le passage d'écoulement de combustible gazeux dans la pile à combustible (60) ; et
(c) dans le cas où le mode d'arrêt a été sélectionné, fournir un gaz de purge dépourvu d'hydrogène au passage d'écoulement de combustible gazeux dans la pile à combustible.
